# EUROPEAN PATENT SPECIFICATION

(11) **EP 2 253 679 B1**
(45) Date of publication and mention of the grant of the patent: **23.03.2016**
(21) Application number: 09160902.4
(22) Date of filing: 22.05.2009
(51) Int. Cl.: C09D 5/22

(54) **A METHOD OF IMPROVING VISIBILITY, CORRESPONDING PATH MARKER AND LIGHTING SOURCE**
VERFAHREN ZUR VERBESSERUNG DER SICHTBARKEIT, ZUGEHÖRIGER PFADMARKIERER UND BELEUCHTUNGSQUELLE
PROCÉDÉ D'AMÉLIORATION DE LA VISIBILITÉ, MARQUEUR DE CHEMIN CORRESPONDANT ET SOURCE LUMINEUSE

(43) Date of publication of application: 24.11.2010
(73) Proprietor: OSRAM GmbH, 80807 München (DE); OSRAM S.P.A. - SOCIETA' RIUNITE OSRAM EDISON CLERICI, 20126 Milano (IT)
(72) Inventor: Toscan, Matteo, 31010, Maser (Treviso) (IT); Capeleto, Simone, 35131, Padova (IT); Jermann, Frank, 86343, Koenigsbrunn (DE); Baumann, Frank, 93055, Regensburg (DE)
(74) Representative: Bosotti, Luciano

(56) References cited:
- EP-A2- 1 278 078
- WO-A2-2007/081997
- US-A1- 2001 010 367

## Description

### Field of the invention

This disclosure relates to means for improving visibility of objects.

This disclosure was devised by paying specific attention to its possible use in providing improved visibility of path markers, i.e. any type of feature such as kerbstones, signs proper, plates, boards upstanding from the ground plus any sort of stripes, markings, spots, and the like - both as an autonomous body and as matter applied (e.g. painted) on a support or substrate - adapted to indicate a path to be travelled e.g. by a vehicle.

Road signs are exemplary of path markers of common use. Markers provided along and/or sidewise of take-off and landing strips in airfields, markers provided alongside channels or water surfaces (e.g. to indicate piers) as well as markers possibly provided in gardens, playgrounds, walkways, drives, car parks and the like as well as marker signs indicating escape routes and exit doors are exemplary of other types of path markers to which the instant disclosure may apply.

Hereinafter, street visibility, e.g. visibility of road signs, will be primarily considered for the sake of simplicity. Also, in this disclosure, "road" and "street" will be used as synonymous terms.

### Description of the related art

Safety of driving is strictly related to street visibility. Street illumination plays an important role, i.e. during the dark hours of the day and in bad weather conditions. Improvements of visibility are thus important added values for safe and comfortable driving.

Conventionally, two different approaches are applied for improving visibility of path markers, passive and active.

"Passive" systems are based on highly reflective path markers (e.g., stripes or marks painted on the street surface) and/or cat-eye structures capable of back-reflecting light coming from e.g. car lights.

"Active" systems rely primarily on the increase of light intensity projected on the street and/or the introduction of active lighting components such as warnings (e.g. indicating dangerous situations) or reference spots (e.g. for indicating the sides of a street or road).

A main advantage of passive solutions lies in their independence from any kind of power supply. On the other hand, passive methods (e.g. the use of punctual signs) only gives partial information on the street features. Moreover, the functionality of passive structures heavily relies on ambient illumination as provided e.g. by car lights. When not properly illuminated (e.g. reached by car illumination), such systems are hardly useful in that visibility is improved only in a reduced area neighbouring the vehicle.

Active components may exhibit higher efficacy and visibility, so that perception of the street features is strongly enhanced.

The European patent application EP 1 278 078 discloses photoluminescent coatings used in road markers. The photoluminescent pigments are ZnS:Cu and alkaline earth luminate phosphors. The photoluminescence is activated by ultraviolet light.

On the other hand, they inevitably require a power supply in the form of a power line, a battery or a power generator (e.g. a photovoltaic panel), which greatly adds to manufacturing, installation and maintenance costs.

### Object and summary of the invention

The previous discussion indicates that the need is felt for solutions adapted to improve visibility of objects such as path markers, while dispensing with the intrinsic drawbacks of the solutions discussed in the foregoing.

The object of the invention is to provide a response to that need.

According to the present invention, that object is achieved by means of a system having the features set forth in the claims that follow.

The claims form an integral part of the disclosure of the invention provided herein.

In an embodiment, visibility of road signs is increased by adding a photo-luminescent compound to e.g. the paint used in the road signs.

Photo-luminescence, namely the emission of light from a substance as a result of absorption of electromagnetic radiation, is a feature known for use in improving visibility (e.g. to increase visibility of needles or pointers in instruments, e.g. to increase visibility of hands in clocks or watches in the dark) by having a photo-luminescent compound absorb photons (i.e. optical radiation or "light") when illuminated to then re-radiate these photons in condition of reduced visibility. One known use of photoluminescent,material is for safety and egress marking, e.g. in the form of of "fire exit" signage.

Various embodiments herein rely on the capability of certain photo-luminescent compounds to absorb optical radiation in an absorption band (referred to as Photo-luminescent Absorption Band or PAB) and to re-radiate it in an emission band (Photo-luminescent Emission Band or PEB), where PAB and PEB are distinct from each other, i.e. do not or only partly correspond to each other.

Various embodiments rely on the fact that the absorption band or PAB of a photo-luminescent compound may be "matched" with the incident light radiation emitted by one or more LEDs (either included in fixed lighting appliances or in lights in motor-cars and other vehicles), while the emission band or PEB can be matched with the visible band (VIS) which corresponds to the region of higher sensitivity of the human eye and is thus clearly perceptible by a driver's eye.

Various embodiments rely on the fact that the average luminous level of an observed scene (e.g. a road) is given by scattered White BroadBand (WBB) light, as provided e.g. by (possibly quite reduced) sunlight, street lighting and/or vehicle lights, while road signs (or other path markers) including, e.g. having painted thereon, a photo-luminescent compound are highlighted against the background scene by the additional luminosity provided in the PEB by the conversion of radiation absorbed by the photo-luminescent compound in the PAB. A driver's eye - adapted to the lower average brightness of the background scene - will thus take full advantage of the emphasized brightness of the road signs.

In various embodiments, the PAB of the photo-luminescent compound is tuned to a selected car light emission band (e.g. a LED emission band) instead of the street light, thus providing an enhancement in street perception and safety of driving.

Various embodiments rely on the possible expected standardisation of photo-luminescent painting characteristics and/or street light emission spectrum and/or car lights emission spectrum, which may lead to an extended enhancement of driving conditions.

### Brief description of the annexed representations

The invention will now be described, by way of example only, with reference to the annexed representations, wherein:
- figure 1 is a diagram representative of spectral emission, of certain light sources and spectral sensitivity of the human eye,
- figure 2 and figure 3 schematically represent two possible embodiments, and
- figures 4 to 7 are various diagrams representative of a spectral emission/reception behaviour of various compounds.

### Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

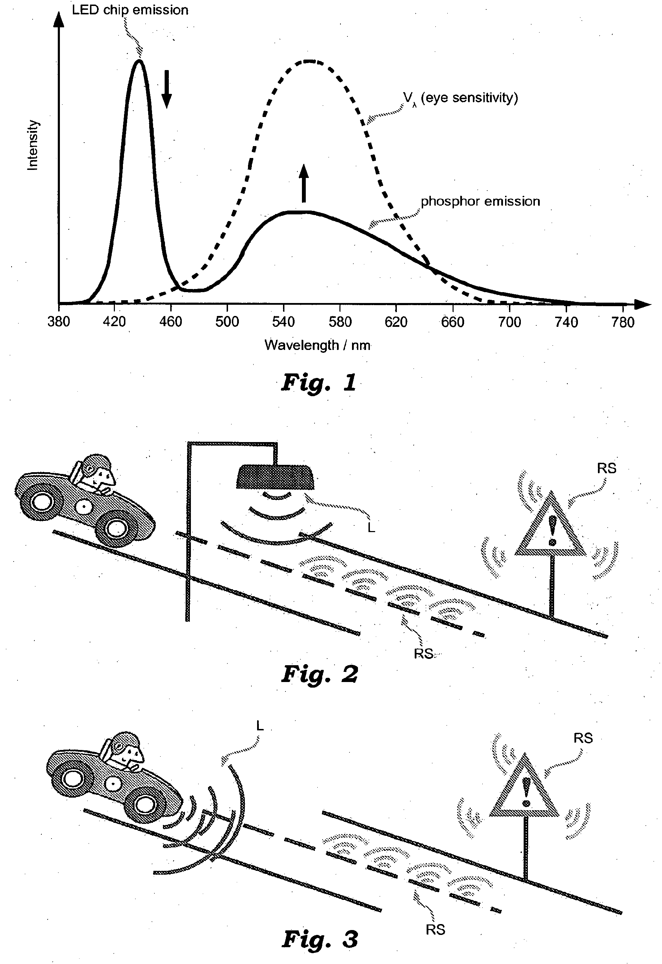

In figure 1 the diagram in full line is schematically representative of the intensity (arbitrary units - ordinate scale) v. wavelength (nm - abscissa scale) of light emitted by a LED (Light Emission Diode) for use in a street lighting source (e.g. for pole mounting or incorporated in a vehicle light).

In such light sources, the LED light emission spectrum proper includes a narrow "blue" peak (typically between 430 and 470 nm) while an additional "yellow" broad-band, typically distributed between 520 and 580 nm, is provided via associated phosphors so that the desired "white" lighting radiation is obtained by blending the "blue" and "yellow" radiations. The "yellow" broad-band is matched to the portion or range in the electromagnetic spectrum where sensitivity of the human eye (as schematically represented in the dashed-line diagram V_{λ)} is higher.

Various embodiments herein rely on the possibility of providing street lighting via such LED-based light sources L (in the form of fixed appliances - see figure 2 - and/or in the form of vehicle lights - see figure 3) having a light emission pattern as schematically illustrated in figure 1 in conjunction with road signs RS (or other path markers) including (e.g. having painted thereon or incorporating, e.g. in a painted stripe) a photo-luminescent compound having:
- a Photo-luminescent Absorption Band (PAB) at least partly matching the "blue" emission band of the LED(s) as portrayed in figure 1 (and/or an adjacent near-UV band), and
- a Photo-luminescent Emission Band (PEB) at least partly matching the yellow band of figure 1 (and/or adjacent green/blue or red/orange bands).

A possible resulting embodiment is thus an integrated system with LED-based street lights L (fixed and/or carried by vehicles) and road signs RS, where, in conditions of reduced luminosity, road signs RS are brighter (e.g. more yellowish) than the average illumination of the background scene.

The brightness enhancement in such a system is a result of electromagnetic radiation emitted by the LEDs being absorbed (in the PAB) and re-emitted (in the PEB) by the photo-luminescent compound, with the PEB at least approximately matching the wavelength range of visible light where sensitivity of the human eye (V_{λ} curve of figure 1) is higher, especially if compared with the wavelength range of the "blue" (and possibly near-UV) light emitted by the semiconductor chip of the LED.

In various embodiments, the spectral characteristics of the photo-luminescent compound (briefly, "phosphor") provide for a PAB with a peak wavelength in the range between 430 nm and 470 nm (preferably between 440 and 455 nm) and a PEB with a peak wavelength between 520 and 580 nm (preferably between 530 and 560 nm).

PABs which, in addition or as an alternative to the "blue" region of the electromagnetic spectrum considered in the foregoing, also cover the near-UV region (390 to 420 nm) and/or the intermediate region 420 to 430 nm of the electromagnetic spectrum (irrespective of whether this intermediate region can be ultimately termed a "blue" region) can be adopted in certain embodiments. The wavelength range between 390 nm and 470 nm is thus exemplary of the blue/near-UV region of the electromagnetic spectrum as considered herein.

As further detailed in the following, in certain embodiments, compounds having PEBs with a peak wavelength shorter than 520 nm (i.e. extending to the "green" range) or longer than 580 nm (i.e. extending to the "orange" or "red" range) can be used to provide a reinforced coloured emission, e.g. to highlight a red stripe surrounding a road sign/alert indicator.

Admixing the compound, e.g. as a pigment, in a paint may represent an easy way to apply the arrangement described herein to road signs in the form of painted stripes (both on the street floor and on boards, panels and the like). However, admixing a photo-luminescent compound as a component in a paint is just one of the possible ways of using such a compound to produce a path marker such as a road sign having enhance visibility when illuminated via e.g. a LED source. Alternative ways of including the compound as disclosed herein in a path marker may include e.g. applying a coating including the compound in a coating process different from painting proper (e.g. spraying, electro-chemical deposition, evaporation, sputtering, etc...) or coating the compound as disclosed herein onto a substrate (e.g. a tape or flexible strip) which is in turn intended to constitute the road sign and/or to be applied onto a road sign. Those referred to in the foregoing are just exemplary of a number of ways of including a compound as disclosed herein in a path marker and other ways of achieving the same result may be easily devised by the person skilled in the art.

With reference to the embodiments exemplified in figures 1 and 2, it will be appreciated that the light sources L may be:
- either light sources (e.g. fixed street lights mounted on poles or vehicle headlights) which are already LED-based and thus have the spectral features as exemplified e.g. in figure 1, or
- otherwise conventional light sources supplemented with an additional radiation source providing an additional (e.g. "blue/near-UV") emission band, with the photo-luminescent compound having a PAD tuned to the light band added to the source.

In either case, the result will be a coordinated system of street lights L and road signs RS where, in condition of poor visibility, road signs are brighter and thus highlighted with respect to the average illumination of the background scene.

Also, the light sources L may include additional lighting pointers intended to illuminate traffic signs (e.g. lights projected on the zone of interest, such lighting pointers being possibly adapted to be switched on and off - i.e. flashed operation - in case of emergency as special warning). In that case, the result will be again a coordinated system of street lights L and road signs RS where, in condition of poor visibility, road signs are brighter than the scene and possibly strongly brighter due to the directionality of the PAB projected light.

It will be appreciated that the same concepts discussed in the foregoing apply irrespective of whether the lights L are "stationary" lights (e.g. pole mounted) as illustrated in figure 2 and/or "moving" (e.g. vehicle headlights) as illustrated in figure 3 In the case of LED-based car lights, the resulting "white" light results by blending a "blue" emission from a LED source with a "yellow" broadband as depicted in figure 1.

A photo-luminescent compound having a PAB in the blue/near-UV band and a PEB in the yellow (green/blue and orange/red) band(s) will result in an integrated system with LED-based car lights and street path markers (e.g. painted stripes and/or road signs) where, in condition of poor visibility, path markers illuminated by the car lights are brighter than the average illumination of the background scene.

Again, conventional (i.e. non LED-based) car lights may be supplemented with an additional LED source emitting an additional (e.g. "blue/near-UV") emission band which is added to the standard illumination band of the car light. Again, a photo-luminescent compound having a PAB matched to the added band and a PEB in the VIS band will result in an integrated system with LED-based car lights and street path markers (e.g. painted stripes and/or road signs) where, in condition of poor visibility, path markers illuminated by the car lights are brighter than the average illumination of the background scene.

It will thus be appreciated that, in both instances considered in figure 2 and 3, the light sources L may be either sources which already exhibit a spectral emission behaviour as represented in the full-line curve of figure 1 or already existing lighting sources which are retro-fitted with additional LED sources to provide an emission behaviour as represented in figure 1.

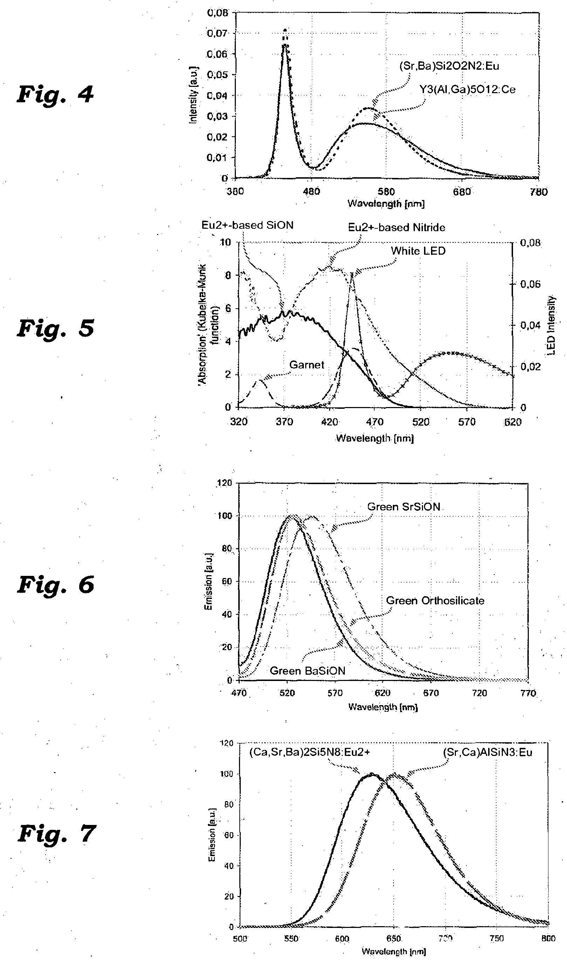

The diagrams of figure 4 to 7 are representative of the spectral behaviour of a number of photo-luminescent compounds. In that respect, while "phosphor" may be a common generic designation for a photo-luminescent compound and the components therein, it will be appreciated that such common designation is in no way mandatorily related to compounds including phosphorus.

Certain photo-luminescent compounds as exemplified herein are already currently used e.g. in automotive lighting in order to generate a "white" broad band radiation starting from the inherent narrow band radiation emitted by a LED source.

For instance, figure 4 is representative of the light intensity (arbitrary units - ordinate scale) v. wavelength (nm - abscissa scale) emitted by a LED-based "white" source for automotive lighting, including a LED providing an emission peak at wavelengths between 435 and 465 nm (left-hand side of figure 4) plus associated "yellow" phosphors to provide an additional yellow emission band (PEB) between approximately 480 and 680 nm.

The exemplary photo-luminescent compounds considered are highly stable garnets such as (Lu, Y, Gd)₃(Al, Ga)₅ O₁₂:Ce³⁺ (e.g. Y3(Al,Ga)5O12:Ce - full line in figure 4) or oxinitrides such as (Ca, Sr, Ba)Si₂O₂N₂:Eu²⁺ (e.g. (Sr,Ba)Si2O2N2:Eu - dashed line in figure 4).

These systems are very stable under various environmental conditions and are thus eligible for use as photo-luminescent compounds for use in path markers such as road signs, which has to be chemically and mechanically stable under the usual environmental conditions such as heat, humidity and optical radiation (especially the UV part of the sunlight).

For that reason, inorganic phosphors may be preferred.

Turning back to the exemplary compounds of figure 4, it will be appreciated that the luminous equivalent of their PEB is quite high as represented in figure 5.

The diagram of figure 5 is a composite diagram which represents, against the wavelengths (nm - abscissa scale) the so-called Kubelka-Munk function (KMF) of various photo-luminescent compounds against the relative emission curve (intensity v. wavelength - continuous line with crosses) of a LED.

The Kubelka-Munk Function or KMF is proportional to the ratio K/S (where K is the Kubelka-Munk absorption coefficient and S is the Kubelka-Munk scattering coefficient) and thus to K (absorption). While S (scattering) may possibly change with wavelength, the KMF is a satisfactory approximation which is usually applied in describing the absorption (i.e. the PAB) of powder materials due to the absence of simple methods for determining the exact absorption of powder materials.

Figure 5 shows that e.g. garnet (dashed line) may exhibit an absorption peak very precisely matched to the emission peak of a LED as used for street lighting, while other Eu²⁺-activated compounds such as Eu²⁺-based SiON compounds (continuous line) or Eu²⁺-based nitrides (pointed line) can also be used with all types of blue and near-UV lighting sources.

Yellow orthosilicates such as (Sr, Ba, Ca)₂SiO₄:Eu²⁺ can also be used in view of their production costs being lower than the production costs of oxynitrides.

Yttrium-based garnet phosphors such as Y₃Al₅O₁₂:Ce represent a good compromise between costs and efficiency.

Alternative phosphors for use in a photo-luminescent compound as considered herein are green phosphors (again garnets, oxynitrides or orthosilicates) yielding a high visibility of markers/signs, this being particularly the case for narrow-banded Eu²⁺-based phosphors such as Sr- or BaSiON and (Sr, Ba)-orthosilicate phosphors.

For instance, the diagrams of figure 6 are representative of the photo-luminescence emission (PEB) characteristics of green BaSiON (full line), green SrSiON (chain line) and green orthosilicate (dashed line) phosphors.

Narrow-banded chlorosilicate-based phosphors such as Ca₈Mg(SiO₄)₄Cl₂:Eu²⁺ (blue-green) and Ca₈Mg(SiO₄)₄Cl₂:Eu²⁺, Mn²⁺(green) can also be used. An additional advantage of Eu²⁺-based phosphors is their broad PAB. Usually Eu²⁺-base phosphors can be excited already by wavelengths right below their own PEB down to UV.

Red colours can be obtained using red nitride phosphors such as (Ca,Ba,Sr)₂Si₂N₈:Eu²⁺ or (Sr,Ca)AlSiN₃: Eu²⁺ having the characteristics shown in figure 7 (full line and chain line, respectively).

Less expensive, less efficient orange-red orthosilicates such as (Mg, Ca, Sr)₂SiO₄:Eu²⁺ can be used. Sulphides such as (Ba,Sr,Ca)S:Eu are less preferred candidates due to their reduced stability. Stability (possibly along with toxicological issues) similarly make sulphoselenides less preferred candidates.

Photo-luminescent emission having e.g. a green or red colour can be advantageously exploited in markers that already have such colouring. For instance, red phosphors may be included in the red contour line of a road sign.

Various embodiments of the arrangement disclosed herein may include one phosphor or several different phosphors blended with typical constituent of paints such as pigments like Ti02. This leads to paints having reduced costs with controllable colour appearance - depending on the phosphor(s) selected - and different degrees of conversion of external light.

In various embodiments, the use of relatively expensive phosphor particles is reduced by using highly absorbing phosphors. This can be achieved e.g. using particle sizes d (as measured by counting particles using for instance a GPS centrifuge) greater than 2 microns, preferably greater than 5 microns in order to reduce scattering.

In various embodiments the doping level is a high, typically 3-4% Ce for garnets; 5-20% for Eu²⁺-doped phosphors to increase the absorption constant.

In various embodiments, these phosphors can also be used with other light sources with high blue spectral contribution such as LEDs based on UV-LEDs and high colour temperature fluorescent lamps.

The PAB of the phospors is matched to the emission characteristics of the LED, UV-LED, fluorescent lamp, etc. so that photons (i.e. light radiation) generated thereby is absorbed by the phosphors in their PAB and re-emitted in their PEB (at least partly distinct from their PAB) thus providing enhanced visibility of the path marker.

The use of phosphor systems as considered herein can be easily detected by x-ray analysis.

Various embodiments of the arrangement disclosed herein are based on the combination of a light source with proper emission spectrum and the use of a compound, possibly to be included in a paint, to be used in path markers such as road signs whose visibility is increased.

Various embodiments can be used during the dark hours of the day and under bad weather conditions (i.e. in all poor visibility conditions) to provide:
- enhanced visibility of the street and road signs in comparison with conventional road signs,
- diffused and continuous information in the place of punctual and partial information as provided by cat-eye structure that back-reflect light coming from car lights.

If the photo-luminescent absorption band is provided by the street light, the visibility enhancement is independent of car lights when not limited to a zone neighbouring the car.

In the case the blue band of white LED-based light coming from street lighting and/or car lights being used for stimulating the photo-luminescent compound, operation is achieved with an extremely compact solution due to common use of blue LED + yellow phosphors in white LED technology. No additional light and related power are required for implementing this operating principle.

The average scene illumination (with the related economical and environmental costs) can be kept quite low due to the independent high visibility of just the relevant information on the street. Such a system does not require additional active components, but can be developed without modifying standard street lighting installations and car headlights. No additional power lines, batteries or bulky power generators (such as photovoltaic panels) with related installation maintenance costs are required.

Without prejudice to the underlying principles of the invention, the details and embodiments may vary, even significantly, with respect to what has been disclosed just by way of example without departing from the scope of the invention as defined by the annexed claims.

## Claims

1. A system of street lights (L) and path marker (RS), comprising:
- a path marker (RS) including a photo-luminescent compound, said compound having a photo-luminescent absorption band or PAB and a photo-luminescent emission band or PEB, whereby radiation absorbed in said PAB is re-emitted in said PEB, said PAB and PEB being at least partly distinct from each other, wherein said photo-luminescent compound has said PEB in the range of visual sensitivity (V_{λ}) of the human eye and said PAB in the blue region of the electromagnetic spectrum, and
- a lighting source (S) including a radiation emitter having a peak emission value in the blue region of the electromagnetic spectrum, said lighting source (S) being configured to operatively co-operating with said path marker (RS) to stimulate photo-luminescence in said photo-luminescent compound, whereby, in condition of poor visibility, road signs are brighter and thus highlighted with respect to the average illumination of the background scene.

2. The system of Claim 1, wherein said PAB has a peak absorption wavelength in the range between 430 nm and 470 nm, preferably between 440 nm and 455 nm.

3. The system of Claim 1 or Claim 2, wherein said PEB is in the range between 520 nm and 580 nm, preferably in the range between 530 nm and 560 nm.

4. The system of any of the previous claims, said path marker (RS) including painted matter painted with a paint including said photo-luminescent compound.

5. The system of any of the previous claims, wherein said PEB is in the green/blue or red/orange regions of the visible spectrum to provide coloured photo-luminescence for said path marker (SR).

6. The system of any of the previous claims, wherein said photo-luminescent compound includes phosphors having particle sizes greater than 2 microns, preferably greater than 5 microns.

7. The system of any of the previous claims, wherein said photo-luminescent compound includes phosphors selected out of garnets, oxynitrides, orthosilicates, chlorosilicates, sulphides, sulphoselenides and combinations thereof.

8. The system of any of any of the previous claims, wherein said photo-luminescent compound includes highly doped phosphors.

9. The system of any of the previous claims, wherein said radiation emitter has a peak emission value between 390 nm and 470 nm, preferably between 440 nm and 455 nm.

10. The system of any of the previous claims, wherein said radiation emitter is selected out of a LED or a high colour temperature fluorescent lamp.

11. The system of any of the previous claims, wherein said radiation emitter is a supplementary emitter supplementing a main lighting generator of said source.

## Patentansprüche

1. System von Straßenlampen (L) und von einem Pfadmarkierer (RS), umfassend:
einen Pfadmarkierer (RS), der eine photolumineszente Verbindung beinhaltet, wobei die Verbindung ein photolumineszentes Absorptionsband oder PAB und ein photolumineszentes Emissionsband oder PEB aufweist, wobei Strahlung, die in dem PAB absorbiert wird, in das PEB wieder emittiert wird, wobei das PAB und das PEB zumindest teilweise voneinander unterschiedlich sind, wobei die photolumineszente Verbindung das PEB in dem Bereich der optischen Empfindlichkeit (V_{λ}) des menschlichen Auges und das PAB in dem blauen Bereich des elektromagnetischen Spektrums aufweist, und
eine Lichtquelle (S), die einen Strahlungsemitter beinhaltet, der einen Spitzenemissionswert in dem blauen Bereich des elektromagnetischen Spektrums aufweist, wobei die Lichtquelle (S) eingerichtet ist, um operativ mit dem Pfadmarkierer (RS) zusammenzuarbeiten, um Photolumineszenz in der photolumineszenten Verbindung zu stimulieren, wodurch in schlechten Sichtbedingungen Straßenschilder heller und demzufolge hervorgehoben sind hinsichtlich der durchschnittlichen Beleuchtung der Hintergrundszene.

2. System nach Anspruch 1, wobei das PAB eine Spitzenabsorptionswellenlänge in dem Bereich zwischen 430 nm und 470 nm, vorzugsweise zwischen 440 nm und 455 nm aufweist.

3. System nach Anspruch 1 oder 2, wobei das PEB in dem Bereich zwischen 520 nm und 580 nm, vorzugsweise in dem Bereich zwischen 530 nm und 560 nm ist.

4. System nach einem der vorangegangenen Ansprüche, wobei der Pfadmarkierer (RS) einen angestrichenen Gegenstand beinhaltet, der mit einer Farbe angestrichen ist, die die photolumineszente Verbindung beinhaltet.

5. System nach einem der vorangegangenen Ansprüche, wobei das PEB in den grünen/blauen oder roten/orangenen Bereichen des sichtbaren Spektrums ist, um farbige Photolumineszenz für den Pfadmarkierer (SR) bereitzustellen.

6. System nach einem der vorangegangenen Ansprüche, wobei die photolumineszente Verbindung Leuchtstoffe beinhaltet, die Partikelgrößen größer als 2 µm, vorzugsweise größer als 5 µm aufweisen.

7. System nach einem der vorangegangenen Ansprüche, wobei die photolumineszente Verbindung Leuchtstoffe beinhaltet, die ausgewählt sind aus Granaten, Oxinitriden, Orthosilikaten, Chlorsilikaten, Sulfiden, Sulfoseleniden und Kombinationen davon.

8. System nach einem der vorangegangenen Ansprüche, wobei die photolumineszente Verbindung hoch dotierte Leuchtstoffe beinhaltet.

9. System nach einem der vorangegangenen Ansprüche, wobei der Strahlungsemitter einen Spitzenemissionswert zwischen 390 nm und 470 nm, vorzugsweise zwischen 440 nm und 455 nm aufweist.

10. System nach einem der vorangegangenen Ansprüche, wobei der Strahlungsemitter ausgewählt ist aus einer LED oder einer fluoreszierenden Lampe mit einer hohen Farbtemperatur.

11. System nach einem der vorangegangenen Ansprüche, wobei der Strahlungsemitter ein ergänzender Emitter ist, der einen Hauptbeleuchtungsgenerator der Quelle ergänzt.

## Revendications

1. Un système de lampadaires urbains (L) et de délimiteur de voie (RS), comprenant :
un délimiteur de voie (RS) comprenant un composé photoluminescent, ledit composé présentant une bande d'absorption de photoluminescence ou PAB et une bande d'émission de photoluminescence ou PEB, de sorte que le rayonnement absorbé dans ladite PAB soit réémis dans ladite PEB, lesdites PAB et PEB étant au moins partiellement distinctes l'une de l'autre, dans lequel ledit composé photoluminescent présente ladite PEB dans la plage de sensibilité visuelle (V_{λ}) de l'oeil humain et ladite PAB dans la région du bleu du spectre électromagnétique, et
une source d'éclairage (S) comprenant un émetteur de rayonnement présentant une valeur de pic d'émission dans la région du bleu du spectre électromagnétique, ladite source d'éclairage (S) étant configurée pour coopérer de manière opérante avec ledit délimiteur de voie (RS) pour stimuler la photoluminescence dans ledit composé photoluminescent de sorte que, dans un état de visibilité médiocre, des panneaux routiers soient plus lumineux et ainsi renforcés par rapport à l'illumination moyenne de la scène environnante.

2. Le système de la revendication 1, dans lequel ladite PAB présente une longueur d'onde d'absorption de crête dans la plage comprise entre 430 nm et 470 nm, de préférence entre 440 nm et 455 nm.

3. Le système de la revendication 1 ou de la revendication 2, dans lequel ladite PEB est dans la plage comprise entre 520 nm et 580 nm, de préférence dans la plage entre 530 nm et 560 nm.

4. Le système de l'une des revendications précédentes, dans lequel ledit délimiteur de voie (RS) comprend de la matière peinte qui est peinte avec une peinture comprenant ledit composé photoluminescent.

5. Le système de l'une des revendications précédentes, dans lequel ladite PEB est située dans les régions vert/bleu ou rouge/orange du spectre visible pour produire une photoluminescence colorée pour ledit délimiteur de voie (SR).

6. Le système de l'une des revendications précédentes, dans lequel ledit composé photoluminescent comprend des luminophores présentant des dimensions de particule supérieures à 2 microns, de préférence supérieures à 5 microns.

7. Le système de l'une des revendications précédentes, dans lequel ledit composé photoluminescent comprend des luminophores choisis parmi les grenats, les oxynitrures, les orthosilicates, les chlorosilicates, les sulfures, les sulfoséléniures et les combinaisons des précédents.

8. Le système de l'une des revendications précédentes, dans lequel ledit composé photoluminescent comprend des luminophores fortement dopés.

9. Le système de l'une des revendications précédentes, dans lequel ledit émetteur de rayonnement présente une valeur d'émission de crête comprise entre 390 nm et 470 nm, de préférence entre 440 nm et 455 nm.

10. Le système de l'une des revendications précédentes, dans lequel ledit émetteur de rayonnement est choisi parmi une LED ou une lampe fluorescente à température de couleur élevée.

11. Le système de l'une des revendications précédentes, dans lequel ledit émetteur de rayonnement est un émetteur additionnel s'ajoutant à un générateur d'éclairage principal de ladite source.
